# EUROPÄISCHE PATENTSCHRIFT

(11) **EP 2 529 126 B1**
(45) Veröffentlichungstag und Bekanntmachung des Hinweises auf die Patenterteilung: **04.03.2015**
(21) Anmeldenummer: 11709074.6
(22) Anmeldetag: 08.03.2011
(51) Int. Cl.: F16D 3/79

(54) **DREHSTARRE KUPPLUNG**
TORSIONALLY RIGID CLUTCH
ACCOUPLEMENT RIGIDE EN TORSION

(30) Priorität: 21.04.2010 DE 102010015772
(43) Veröffentlichungstag der Anmeldung: 05.12.2012
(73) Patentinhaber: Siemens Aktiengesellschaft, 80333 München (DE)
(72) Erfinder: HOFMANN, Andreas, 91091 Grossenseebach (DE); KEBERER, Andreas, 90762 Fürth (DE)
(86) Internationale Anmeldenummer: PCT/EP2011/053422
(87) Internationale Veröffentlichungsnummer: WO 2011/131415

(56) Entgegenhaltungen:
- DE-A1- 2 741 652
- DE-U1- 8 606 870
- DE-U1- 9 101 314
- US-A- 2 251 722
- US-A- 3 654 775

## Beschreibung

Die Erfindung betrifft eine drehstarre Kupplung zum mittel- oder unmittelbaren Verbinden einer Strömungsmaschine mit einem Getriebe oder einem Generator/Motor, sowie eine Strömungsmaschine, insbesondere eine Dampfturbine, mit einer solchen drehstarren Kupplung.

Strömungsmaschinen werden grundsätzlich in Kraft- und Arbeitsmaschinen unterschieden. Eine Arbeitsmaschine ist eine angetriebene Maschine, die Energie in Form von mechanischer Arbeit aufnimmt. Sie ist das Gegenstück zum Antrieb oder Motor, auch Kraftmaschine genannt, die mechanische Energie abgibt. Je nach Art der Maschine, also Kraft- bzw. Arbeitsmaschine, sind die Maschinen mit einem Generator oder Motor gekoppelt. In vielen Fällen ist zwischen der Strömungsmaschine und den Generator/Motor ein Getriebe angeordnet. Die Strömungsmaschine ist mit dem Getriebe bzw. dem Generator/Motor über eine Kupplung mittel- oder unmittelbar verbunden. Die Kupplung sorgt dabei für eine Übertragung des Drehmomentes. Die Kupplung ist normalerweise als drehstarre Kupplung ausgebildet. Drehstarre Kupplungen übertragen das Drehmoment wie starre Kupplungen d.h. ohne Drehnachgiebigkeit. Im Gegensatz zu starren Kupplungen können drehstarre Kupplungen jedoch je nach Bauart Fluchtungs- und Lagerfehler der zu kuppelnden Wellen ausgleichen. Ursache solcher Fehler können zum Beispiel elastischer Verformungen der Wellen, unterschiedliche Wärmeausdehnungskoeffizienten der Maschinenteile und/oder Ausrichtungsfehler bei der Montage sein. Als drehstarre Kupplung wir häufig eine Lamellenkupplung eingesetzt. Die Lamellenkupplung besteht aus einem Lamellenpaket, welches mittels Zylinderschrauben mit Sicherungsmuttern mit den beiden Flanschen der Lamellenkupplung wechselseitig verschraubt ist. DAs Lamellenpaket kann sich bei Wellenverlagerungen axial oder winklig verformen und so eine Ausgleich zwischen den zu verbindenden Wellen erzielen.

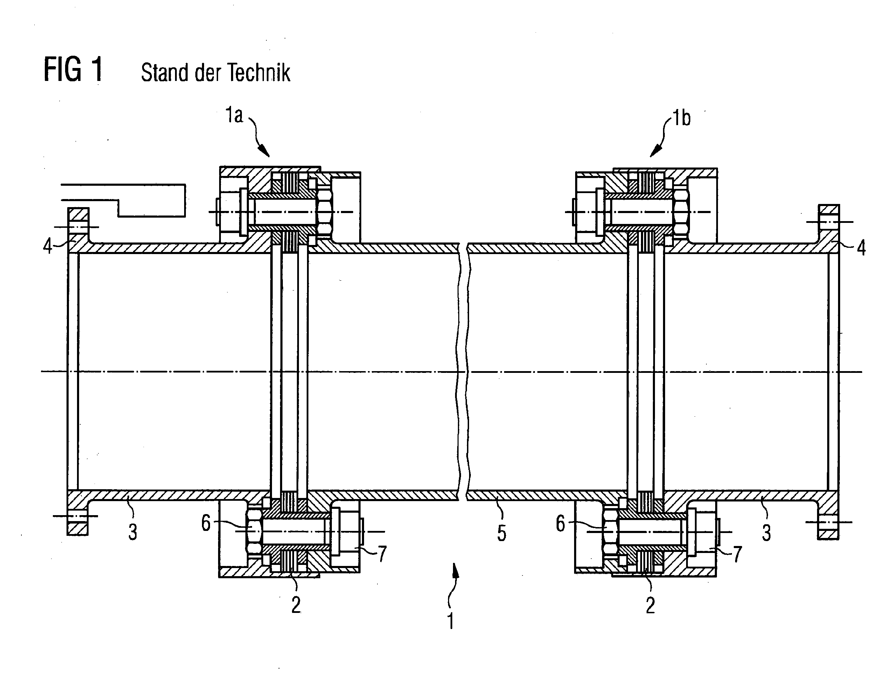

Bei Strömungsmaschinen kommen dabei bislang ausschließlich Doppelkupplungen zum Einsatz. Eine solche Doppelkupplung ist in Figur 1 dargestellt. Die Doppelkuppelung kann hat den Vorteil, das Sie auch radiale Wellenverlagerungen ausgleichen kann. Die Doppelkupplung ist spielfrei sowie wartungs- und verschleißfrei und kann auch bei höheren Temperaturen eingesetzt werden.

Die Doppelkupplung hat jedoch aufgrund der zwei notwendigen Lamellenpakete ein relatives hohes Gewicht welches aus rotordynamischer Sicht ungünstig ist. Aus rotordynamischer Sicht wäre ein geringeres Gewicht sowie ein geringer Schwerpunktabstand und Außendurchmesser der Kupplung wünschenswert, da dadurch die Auswirkungen auf das Schwingeverhalten der Kupplung vermindert würden. Auf Grund der zwei Lamellenpakete kommt es an der Kupplung zu hoher Ventilationsverluste

Auf Grund der zwei Lamellenpakete ist die Einbindung der Kupplung in die vorhandenen Lagerkörper nicht ohne weiteres zu realisieren. Es wäre wünschenswert, die Kupplung näher an den Lagerkörper anzuordnen.

Aus der DE 27 41 652 ist eine drehsteife, elastisch beugefähige Wellenkupplung bekannt, mit wenigstens einer das Drehmoment zwischen zwei Kupplungshälften übertragenden drehsteifen und beugefähigen scheibenförmigen Membran. Das Drehmoment wird in die Membran über Reibschluss und/oder über Formschluss von einer kupplungszugewandten und von einer kupplungsabgewandten Seite in die Membran übertragen, indem über drehstarre Verbindungsglieder und über Mitnehmer ein Teil des Drehmomentes auf die abgewandte Seite der Membranen weitergeleitet wird. Für Turbomaschinen sieht die DE 27 41 652 zur Wellenverbindung Gelenkwellen mit zwei solchen Kupplungen vor, wobei die Wellenkupplungen in symmetrischer Anordnung mit einer Zwischenwelle, zum Beispiel einer Hülse verbunden sind.

Die US 3,654,775 A offenbart eine drehsteife Kupplung mit zwei Kupplungsteilen und einem Lamellenpaket, welches der Kupplung einen axialen und winkeligen Wellenausgleich ermöglicht.

Die US 2,251,722 offenbart eine Gelenkkupplung, welche über eine Notfallvorrichtung zum Auffangen des generatorseitigen Wellenendes verfügt, und so den Generator bei Kupplungsbruch vor Beschädigung schützt.

Die DE 86 06 87 0 U1 offenbart eine Lamellenkupplung, die zwei Kupplungsflansche drehsteif und winkelbeweglich verbindet. Die DE 86 06 87 0 U1 zeigt keine Kupplung mit einem einzelnen Lamellenpaket, das zwischen zwei Hülsen mit flexibler Ausbildung gelagert ist.

Die DE 91 01 314 U1 offenbart Membrankupplungen mit durchbrochenen Konturmembranen. Das heißt, die DE 91 01 314 U1 beschreibt eine erste Membrankupplung mit einer Membrankonstruktion, welche im elastischen Membranbereich neben einer radial variablen Kontur zusätzliche Durchbrüche aufweist. Diese Durchbrüche dienen dazu, eine höhere Beugeelastizität der Kupplung bei geringstem Drehmoment und Drehzahlkapazitätsverlust zu erzielen. Die DE 91 01 314 U1 gibt an, dass nur mit einer zweiten Ausgleichsebene als Doppelkupplung Axial-, Winkel- und auch Radialfehlfluchtungen aufgenommen werden können.

Ausgehend vom zuvor beschriebenen Stand der Technik ist es deshalb Aufgabe der vorliegenden Erfindung, eine drehstarre Kupplung bereitzustellen, die zur mittel- oder unmittelbaren Verbindung einer Strömungsmaschine mit einem Getriebe oder einem Generator/Motor geeignet ist, und die ein geringes Gewicht sowie geringe Ventilationsverluste bei gleichzeitig guter Einbindbarkeit in den vorhandenen Lagerkörper ergibt. Des Weiteren ist es Aufgabe der vorliegenden Erfindung eine Strömungsmaschine mit einer solchen drehstarren Kupplung bereitzustellen.

Die Aufgabe wird hinsichtlich der drehstarren Kupplung nach den Merkmalen des Patentanspruchs 1 und hinsichtlich der Strömungsmaschine nach den Merkmalen des Patentanspruchs 5 gelöst.

Weitere vorteilhafte Ausgestaltungen der drehstarren Kupplung, welche einzeln oder in Kombination miteinander einsetzbar sind, sind Gegenstand der Unteransprüche.

Die erfindungsgemäße drehstarre Kupplung zum mittel- oder unmittelbaren Verbinden einer Strömungsmaschine mit einem Getriebe oder einem Generator/Motor zeichnet sich dadurch aus, dass die Kupplung eine Lamellenkupplung ist und lediglich ein einziges Lamellenpaket aufweist. Auf diese Weise kann eine besonders leichte, drehstarre Kupplung realisiert werden, die aufgrund des fehlenden zweiten Lamellenpaketes geringere Ventilationsverluste aufweist. Durch das Weglassen eines Lamellenpaketes ist die drehstarre Kupplung zudem einfacher im Aufbau, wodurch eine Kostenreduzierung der Kupplung erreicht wird. Die drehstarre Kupplung ist zudem besser einbindbar in einen vorhandenen Lagerkörper, da ein Lamellenpaket entfällt und die Kupplung dadurch näher an den Lagerkörper angeordnet werden kann. Durch die Ausbildung der Kupplung mit einem einzigen Lamellenkupplungspaket können radiale Wellenverlagerungen allerdings nicht unmittelbar ausgeglichen werden.

Eine vorteilhafte Ausgestaltung der Erfindung sieht vor, dass das Lamellenpaket zwischen Hülsen angeordnet ist, welche mit der Strömungsmaschine einerseits und dem Getriebe bzw. dem Generator/Motor andererseits verbindbar sind. Grundsätzlich könnte die drehstarre Kupplung auch unmittelbar mit den Wellen der Strömungsmaschine bzw. des Getriebes oder dem Generator/Motor verbunden sein. Die Anordnung zwischen zwei Hülsen bietet jedoch den Vorteil, dass das Lamellenpaket besonders einfach gewechselt werden kann, ohne das große Demontagen an der Anlage erfolgen müssen.

Eine weitere besonders vorteilhafte Ausgestaltung der Erfindung sieht vor, dass die zwei Hülsen einen axialen Versatz zwischen den Wellenachsen der Strömungsmaschine und der Wellenachse des Generator/Motors bzw. Getriebes aufgrund ihrer flexiblen Ausbildung ausgleichen können. Hierzu ist zum einen eine geeignete Auswahl des Hülsenwerkstoffes und zum anderen eine entsprechende Dimensionierung hinsichtlich der Wandstärke der Hülsen notwendig. Die Wandstärke ist dabei so zu wählen, dass die Hülse zum einen so flexibel ist, das sie eine Schwingungskompensation gewährleisten und Ausrichtungsabweichungen der zu verbindenden Wellen ausgeglichen kann, zum anderen muss Sie aber auch so dick sein, dass Sie dauerhaft den Belastungen im Betrieb stand hält.
Durch die geeignete Auswahl der Hülsen kann somit der fehlende radiale Wellenausgleich aufgrund des fehlenden zweiten Lamellenpaketes zu einem Teil wieder ausgeglichen werden.

Die erfindungsgemäße Strömungsmaschine, insbesondere Dampfturbine, zeichnet sich dadurch aus, dass eine drehstarre Kupplung nach einem der vorherigen beschriebenen Ansprüche verwendet wird. Durch die Verwendung der erfindungsgemäßen drehstarren Kupplung kann ein besonders ventilationsarmer Betrieb der Kupplung gewährleistet werden und durch das geringe Gewicht der erfindungsgemäßen Kupplung ergibt sich ein rotordynamische besonders günstiger Betrieb, der sich besonders vorteilhaft auf das Schwingungsverhalten der Kupplung und damit des gesamte Systems auswirkt. Durch das Fehlen eines Lamellenpakets kann die drehstarre Kupplung zudem besser in den vorhandenen Lagerkörper der Strömungsmaschine bzw. des Getriebes oder des Generators/Motors eingebunden werden.

Zusammenfassend lässt sich somit sagen, dass sich durch die erfindungsgemäße drehstarre Kupplung zum einen zahlreiche technische Vorteile gegenüber dem bisherigen verwendeten drehstarren Kupplung ergeben, zum anderen kann durch den einfachen Aufbau der Kupplung die Kosten für eine solche Kupplung reduziert werden. Der einfachere Aufbau der Kupplung wirkt sich daneben auch positiv auf die Defektanfälligkeit einer solchen Kupplung aus.

Weitere Vorteile der Erfindung werden nachfolgend an einem Ausführungsbeispiel erläutert. Es zeigt:
- Figur 1: eine Kupplung mit zwei Lamellenpaketen entsprechend dem Stand der Technik;
- Figur 2: eine erfindungsgemäße drehstarre Kupplung.

Die Figuren zeigen jeweils eine vereinfachte schematische Abbildung der Erfindung. Gleiche bzw. funktionsgleiche Bauteile werden figurübergreifend mit denselben Bezugszeichen versehen.

Figur 1 zeigt eine drehstarre Kupplung 1 wie sie üblicherweise zum Verbinden einer Strömungsmaschine mit einem Getriebe oder einem Generator/Motor verwendet wird. Bei der drehstarren Kupplung 1 handelt es sich um eine biegenachgiebige Ganzmetallkupplung, welche als Lamellendoppelkupplung ausgebildet ist. Die Lamellendoppelkupplung weist zwei Lamellenpakete 2 auf. Die Doppellamellenkupplung weist eine mittlere Hülse 5 mit stirnseitig angeordneten Flanschen auf. Des Weiteren umfasst die Lamellendoppelkupplung an ihrer jeweiligen Außenseite zwei weitere Hülsen 3 die ebenfalls an ihren Enden mit Flanschen versehen sind. Die Lamellenpakete 2 sind mittels Zylinderschrauben 6 mit den Flanschen der Hülsen 3, 5 verschraubt und mit Sicherungsmuttern 7 gesichert.

Eine Kupplungshälfte la ist mit einer in der Figur 1 nicht dargestellten Strömungsmaschine, die andere Kupplungshälfte 1b mit einem ebenfalls nicht dargestellten Getriebe oder einem Generator/Motor verbunden. Aufgrund der nachgiebigen elastischen Lamellenpakete 2 kann ein axialer und/oder winkliger Versatz der Wellen von Strömungsmaschine und Getriebe oder Generator/Motor ausgeglichen werden. Durch die Verwendung zweier Lamellenpakete 2 kann zusätzlich ein radialer Versatz der Wellen ausgeglichen werden.

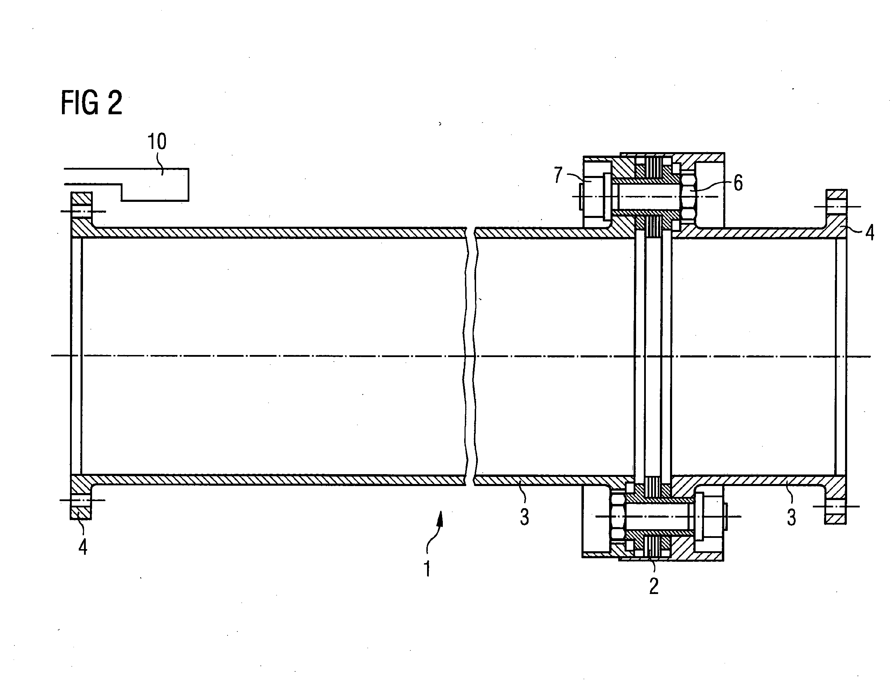

Figur 2 zeigt ein Ausführungsbeispiel einer erfindungsgemäßen drehstarren Kupplung zum mittel- oder unmittelbaren Verbinden einer Strömungsmaschine mit einem Getriebe oder einem Generator/Motor. Im Gegensatz zum Stand der Technik wird bei der drehstarren Kupplung 1 anstelle zweier Lamellenpakete 2 nur noch ein einziges Lamellenpaket 2 verwendet. Die drehstarre Kupplung 1 benötigt daher nur zwei Hülsen 3 die über Flansche mit dem Lamellenpaket 2 verbunden werden. Die Verbindung erfolgt über Zylinderschrauben 6 die mit Sicherungsmuttern 7 gesichert werden. Durch die Verwendung lediglich eines Lamellenpaketes 2 vereinfacht sich die Konstruktion der drehstarren Kupplung 1 erheblich. Das Fehlen des zweiten Lamellenpaketes wirkt sich positiv auf das Gewicht der drehstarren Kupplung 1 auf, die hierdurch aus rotordynamischer Sicht ein günstigeres Schwingungsverhalten aufweist. Der Verzicht auf das zweite Lamellenpaket reduziert zudem die Ventilationsverluste erheblich. Auf Grund der konstruktiven Ausgestaltung der drehstarre Kupplung 1, lässt sich diese zudem besser in den vorhandenen Lagerkörper 10 einbinden. Die fehlende radiale Ausgleichsmöglichkeit der drehstarren Kupplung 1 auf Grund des fehlenden zweiten Lamellenpaketes wird durch eine flexible Ausbildung der Hülsen 3 weitgehend ausgeglichen. Die flexible Ausbildung lässt sich durch eine geeignete Wahl der Wandstärke der Hülsen 3 sowie einer entsprechenden Materialauswahl der Hülse erreichen.

Die erstmalige Verwendung einer drehstarren Kupplung mit lediglich einem Lamellenpaket zum Verbinden einer Strömungsmaschine mit einem Getriebe oder einem Generator/Motor bietet somit eine besonders kostengünstige, einfache sowie gewichtsoptimierte Ausbildung einer drehstarren Kupplung. Die fehlende radiale Ausgleichsmöglichkeit wird dabei durch eine flexible Ausbildung der Hülsen welche durch eine spezielle Auswahl der Wandstärke und des Materials erfolgt zu einem Großteil kompensiert.

Die drehstarre Kupplung eignet sich insbesondere für Strömungsmaschinen insbesondere Dampfturbinen bei denen die bislang verwendeten drehstarren Kupplungen mit doppelten Lamellenpaket zu den zuvor beschriebenen Nachteilen, nämlich ungünstigen Schwingungsverhalten aufgrund hohen Gewichts sowie hoher Ventilationsverluste geführt hat. Die erfindungsgemäße drehstarre Kupplung kann dabei einfach und auch noch nachträglich anstelle der bislang verwendeten drehstarren Kupplungen mit doppeltem Lamellenpaket verwendet werden.

## Patentansprüche

1. Drehstarre Kupplung (1) zum mittel- oder unmittelbaren Verbinden einer Strömungsmaschine mit einem Getriebe oder einem Generator/Motor, wobei
die drehstarre Kupplung (1) eine Lamellenkupplung ist und ein einziges Lamellenpaket (2) aufweist, und das Lamellenpaket (2) zwischen zwei Hülsen (3) angeordnet ist, welche mit der Strömungsmaschine einerseits und dem Getriebe bzw. dem Generator/Motor andererseits verbindbar sind, **dadurch gekennzeichnet, dass** die zwei Hülsen (3) einen axialen Versatz zwischen der Wellenachse der Strömungsmaschine und der Wellenachse des Generator/Motor bzw. des Getriebes aufgrund ihrer flexiblen Ausbildung ausgleichen können.

2. Drehstarre Kupplung (1) nach Anspruch 1,
**dadurch gekennzeichnet, dass**
die Strömungsmaschine eine Turbine, insbesondere eine Dampfturbine, oder ein Kompressor ist.

3. Strömungsmaschine, insbesondere Dampfturbine, mit einer drehstarren Kupplung (1) nach einem der vorherigen Ansprüche.

## Claims

1. Torsionally rigid coupling (1) for the indirect or direct connection of a turbomachine to a transmission or to a generator/motor, wherein the torsionally rigid coupling (1) is a lamellar coupling and has a single pack of lamellae (2), and the pack of lamellae (2) is arranged between two sleeves (3) which are connectable to the turbomachine at one side and to the transmission or the generator/motor at the other side, **characterized in that** the two sleeves (3) can, owing to their flexible form, compensate an axial offset between the shaft axis of the turbomachine and the shaft axis of the generator/motor or of the transmission.

2. Torsionally rigid coupling (1) according to Claim 1,
**characterized in that**
the turbomachine is a turbine, in particular a steam turbine, or a compressor.

3. Turbomachine, in particular steam turbine, having a torsionally rigid coupling (1) according to one of the preceding claims.

## Revendications

1. Accouplement rigide en torsion (1) pour relier, de manière directe ou indirecte, une turbomachine à un mécanisme de transmission ou un générateur/moteur, l'accouplement rigide en torsion (1) étant un accouplement à lamelles et présentant un seul paquet de lamelles (2), et le paquet de lamelles (2) étant disposé entre deux manchons (3) pouvant être reliés à la turbomachine d'une part et au mécanisme de transmission ou au générateur/moteur d'autre part,
**caractérisé en ce que** les deux manchons (3) sont capables de compenser un décalage axial entre l'axe d'arbre de la turbomachine et l'axe d'arbre du générateur/moteur ou du mécanisme de transmission, grâce à leur conformation flexible.

2. Accouplement rigide en torsion (1) selon la revendication 1,
**caractérisé en ce que** la turbomachine est une turbine, en particulier une turbine à vapeur, ou un compresseur.

3. Turbomachine, en particulier turbine à vapeur, équipée d'un accouplement rigide en torsion (1) selon l'une des revendications précédentes.
